(19) Europäisches Patentamt
European Patent Office
Office européen des brevets

(11) **EP 1 821 381 A2**

(12) **EUROPÄISCHE PATENTANMELDUNG**

(43) Veröffentlichungstag:
**22.08.2007 Patentblatt 2007/34**

(51) Int Cl.:
*H02J 3/00* (2006.01)

(21) Anmeldenummer: **07102715.5**

(22) Anmeldetag: **20.02.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **20.02.2006 DE 102006008105**
**24.05.2006 DE 202006008451 U**
**02.06.2006 DE 102006026322**

(71) Anmelder: **Tanneberger, Ralf, Dr.-Ing.**
**01445 Radebeul (DE)**

(72) Erfinder: **Tanneberger, Ralf, Dr.-Ing.**
**01445 Radebeul (DE)**

(74) Vertreter: **Lippert, Stachow & Partner**
**Patentanwälte**
**Krenkelstrasse 3**
**01309 Dresden (DE)**

(54) **Verfahren und Schaltungsanordnung zur Verteilung eines Energieangebotes an elektrische Großgeräte**

(57) Der Erfindung, die ein Verfahren und eine Schaltungsanordnung betrifft, wobei aus einem den elektrischen Leistungsverbrauch zumindest aller parallel geschalter Großgeräte repräsentierenden Zählersignal mittels eines Trendrechnungsverfahrens zu mehreren Zeitpunkten (t) ermittelt wird, ob mit dem momentanen Leistungsbezug ($P_t$) eine maximale Energie ($W_{max}$) überschritten würde und in Abhängigkeit davon eine Reduzierung des maximalen Leistungsbezuges eines oder mehrerer Großgeräte erfolgt, liegt die Aufgabe zugrunde, eine Kostensenkung bei energieintensiven Produktionsprozessen bei Einhaltung einer höchst zulässigen Produktivitätsverringerung zu erreichen. Dies wird dadurch gelöst, dass aus dem Zählersignal ein Leistungssteuersignal ($I_{korr}$) berechnet wird, dessen Größe danach festgelegt wird, ob mit dem momentanen elektrischen Leistungsverbrauch ($P_t$) eine festgelegte Grenze einer elektrischen Energie ($W_{max}$) in einer Zeiteinheit (T) an dem Zähler überschritten würde. Mit diesem Leistungssteuersignal ($I_{korr}$) wird die Leistungsaufnahme ($P_{ti}$) zumindest der Mehrzahl der elektrischen Großgeräte begrenzt. Damit ist sicher gestellt, dass stets nur die Leistung bezogen wird, die ein Überschreiten der maximalen Energiemenge $W_{max}$ verhindert.

FIG 3

EP 1 821 381 A2

**Beschreibung**

Die Erfindung betrifft eine Schaltungsanordnung zur Verteilung eines Energieangebotes an elektrische Großgeräte in einer Zeiteinheit. Die Großgeräte selbst sind mit ihrem Leistungseingang über einen Zähler in einem Stromnetz parallel geschaltet. Die Großgeräte selbst mit einer eigenen, den Verbrauch beeinflussenden Regelungsschaltung versehen. Diese Regelungsschaltungen weisen einen leistungsbegrenzenden Sollwerteingang auf.

Die Erfindung betrifft auch ein Verfahren zur Verteilung eines Energieangebotes an elektrische Großgeräte in einer Zeiteinheit, bei dem aus einem den elektrischen Leistungsverbrauch zumindest aller parallel geschalter Großgeräte repräsentierenden Zählersignal mittels eines Trendrechnungsverfahrens zu mehreren Zeitpunkten (t) ermittelt wird, ob mit dem momentanen Leistungsbezug ($P_t$) eine maximale Energie ($W_{max}$) überschritten würde und in Abhängigkeit davon eine Reduzierung des maximalen Leistungsbezuges eines oder mehrerer Großgeräte erfolgt.

Zur Vermeidung von Spitzenbelastungen in Mittelspannungsnetzen werden die Verbraucher, die neben einer Grundlast aus einem elektrischen Netz auch Energie für Großgeräte beziehen, angehalten, Leistungsspitzen zu vermeiden, denn gerade diese Leistungsspitzen sind es, die den Umfang des Ausbaus eines Energienetzes bestimmen. Aus diesem Grunde wird von den Energieanbietern ein Abrechnungssystem eingerichtet, welches sich an den Leistungsspitzen orientiert. Hierbei wird der Tarif eines gesamten Jahres danach bemessen, in welcher Höhe Leistungen innerhalb eines bestimmten Zeitintervalls, in der Regel innerhalb einer Viertelstunde, bezogen werden. Wird innerhalb dieses Zeitintervalls eine hohe Leistung bezogen, so wird für das gesamte Folgejahr ein höherer Tarif berechnet. Damit wird der Verbraucher angehalten, innerhalb eines jeden Zeitintervalls den Leistungsbezug zu minimieren.

Derartige Tarifsysteme gelten insbesondere für Großverbraucher, wie beispielsweise Gießereien, aber auch für andere großverbrauchende Unternehmen. In Gießereien werden beispielsweise als Großgeräte Schmelzöfen eingesetzt. Dabei ist jeder Schmelzofen für sich temperaturgeregelt. Dies bedeutet, dass unbeachtet vom Regelzustand der anderen Schmelzöfen ein jeder Schmelzofen den Schaltzustand einnehmen würde, den er für seinen Energiebezug benötigt, um die erforderliche Schmelztemperatur einzustellen. Bei mehreren Schmelzöfen kann es somit vorkommen, dass mehrere Schmelzöfen gleichzeitig in den vollen Leistungsbezug schalten. Hält dieser Leistungsbezug längere Zeit an, insbesondere innerhalb des Zeitintervalls, so kann dies dazu führen, dass durch einen einmaligen vollen Leistungsbezug für ein gesamtes Jahr der Tarif für den Verbraucher heraufgesetzt wird.

Um dieser Erscheinung zu begegnen, ist ein so genanntes Trendrechnungsverfahren bekannt, bei dem laufend die Energie innerhalb eines Zeitintervalls, das heißt das Produkt aus Leistung und Zeit innerhalb der Zeiteinheit, berechnet wird. Ergibt diese Rechnung im Trend, dass innerhalb der Zeiteinheit eine aus der Tarifberechnung resultierende Grenze der Energie, nämlich oberhalb derer eine größere Energie bzw. ein weiterer Leistungsbezug in der bisherigen Höhe zu einer Tariferhöhung führen würde, überschritten würde, wird ein Ofen abgeschaltet, d.h. auf eine technische Minimallast geschaltet. Führt dieses Abschalten nicht zu einer solchen Trendänderung, dass die Grenze der Energie unterschritten wird, so wird ein weiterer Ofen abgeschaltet.

Da jeder Ofen mit einer eigenen Temperaturregelungsanordnung versehen ist, kann das Abschalten eines Ofens dadurch realisiert werden, dass der Sollwertgeber der Temperaturregelungsanordnung heruntergesetzt, beispielsweise auf null gesetzt wird. Dies führt dazu, dass der gegenwärtige Temperaturzustand eines derartigen Ofens keine weitere Energiezufuhr benötigen würde und somit auch kein weiterer Leistungsbezug durch diesen Ofen erfolgt.

Die Auswertung des Energiebezuges und die Steuerung des abgeschalteten Ofens erfolgen mittels eines Prozessrechners. Dieser Prozessrechner ist mit einem seiner Eingänge mit einem an der Netzeinspeisestelle angeordneten Zähler und zwar mit einem daran befindlichen Ausgang für Zählimpulse verbunden. An diesem Zählimpulsausgang werden von dem Zähler Zählimpulse derart bereitgestellt, dass deren zeitlicher Abstand dem momentanen Leistungsbezug des Verbrauchers entspricht. Einem hohen momentanen Leistungsbezug werden Zählimpulse mit einem geringen zeitlichen Abstand und bei einem vergleichsweise geringen Leistungsbezug Zählimpulse mit einem großen zeitlichen Abstand zueinander bereitgestellt.

Aus der Information über den momentanen Leistungsbezug erfolgt in dem Prozessrechner die Trendberechnung. Bei dieser Trendberechnung wird ermittelt, ob bei dem momentanen Leistungsbezug eine festgelegte maximale Grenze der Energie überschritten würde.

Der Prozessrechner ist, gegebenenfalls über weitere Interface-Schaltungen, mit mehreren Steuerausgängen versehen. Diese Steuerausgänge sind mit Steuereingängen an Reglern der einzelnen Öfen verbunden.

Wird nun durch die Trendberechnung ein Überschreiten der Grenze der maximalen Energie festgestellt, so wird an einem Steuerausgang ein solches Steuersignal bereitgestellt, das den Ofen zum Herunterregeln zwingt. In aller Regel wird das Steuersignal durch einen Steuerstrom dargestellt, wobei entsprechend die Steuereingänge als Stromeingänge ausgebildet sind. Trägt beispielsweise der maximale Steuerstrom 20 mA, so bedeutet dies, dass der Regler den Ofen bis zur vollen Leistung aussteuern kann. Ein entsprechend geringerer Steuerstrom führt zu einer Leistungsbegrenzung des Reglers.

Ein derartiges Abschalten oder Herunterregeln eines Ofens führt dazu, dass dieser später die Schmelztemperatur erreicht. Dies wiederum führt dazu, dass nachfolgende Prozesse, z. B. der Formenguss innerhalb der Formanlage behindert wird.

In der Praxis hat sich gezeigt, dass ein Produktivitätsverlust, der durch das späte Erreichen der Schmelztemperatur bei den Schmelzöfen hervorgerufen wird, bis maximal 3% des Produktionsumfanges kompensiert werden kann. Dies wiederum bedeutet, dass die maximale Grenze der Energie entsprechend hoch gewählt werden muss, um die Kompensationsgrenze nicht zu überschreiten. Dies führt folgerichtig zu entsprechend hohen Tarifen.

Die Aufgabe der Erfindung besteht somit darin, eine Kostensenkung bei energieintensiven Produktionsprozessen bei Einhaltung einer höchst zulässigen Produktivitätsverringerung zu erreichen.

Die bei der nachfolgenden Darstellung der Lösung der Aufgabenstellung verwendeten Begriffe werden folgendermaßen definiert:

Zeitintervall T: Zeitbereich, innerhalb dem eine maximale Energiemenge $W_{max}$ nicht überschritten werden soll, da anderenfalls eine Gebührenerhöhung für das ganze Jahr eintritt.

Die im Zeitintervall verbrauchte Energie $W_T$ berechnet sich als Integral der Istleistung $P_t$ über dem Zeitintervall T:

$$W_T = \int_0^T P_t \cdot dt$$

Bedingung des Energielieferanten: $W_T \leq W_{max}$, wobei

$$W_{max} = \frac{W_{max-h} \cdot T}{1h}$$

Dabei wird mit $W_{max-h}$ die übliche Stunden-Energiemenge, z.B 5000 KWh, angegeben.

Maximalleistung $P_{max}$: Die Leistung, die innerhalb des Zeitintervalls insgesamt nicht überschritten werden soll:

$$P_{max} = \frac{W_{max}}{T}$$

Istleistung $P_t$: Die tatsächliche Leistung zum aktuellen Zeitpunkt t, die sich als Summe aller Teilleistungen $P_{ti}$ aller i Großgeräte, gegebenenfalls zuzüglich der Grundlast

$$P_{tgrund} \text{ berechnet: } P_t = \sum_2^i P_{ti} + P_{tgrund}$$

Sollleistung $P_{opt}$: Die Leistung zum Zeitpunkt t, die zum Ziel führt, die maximale Energiemenge $W_{max}$ oder $P_{max}$ nicht zu überschreiten

Korrekturleistung $P_{korr}$: Die Leistung, mit der die Istleistung korrigiert werden muss, um die Sollleistung $P_{opt}$ zu erreichen

$$P_{korr} = P_t - P_{opt}$$

Leistungssteuersignal:

$$I_{korr} \approx P_{max} - P_{korr}$$

$$I_{korr} = 4 \ldots 20 mA$$

$$I_{opt} = 20 mA \mathrel{\hat{=}} P_{opt}$$

$$I_{korr} = I_{opt}\left(1 - \frac{P_{korr}}{P_{opt}}\right)$$

Anordnungsseitig wird die Aufgabe wird dadurch gelöst, dass eine die Sollwerteingänge mit je einem von dem Leistungsbezug aller an dem Zähler angeschlossenen Verbraucher abhängigem Sollwertsignal (S) beaufschlagende Sollwertgeber-Anordnung mit den Sollwerteingängen der Regelungsschaltungen der Großgeräte verbunden ist. Mit einer derartigen Anordnung wird erreicht, dass jedes Großgerät in Abhängigkeit von dem Gesamtleistungsbezug mit einer verringerten Leistung betrieben werden kann. Die innerhalb des Zeitintervalls bis zu dem Zeitpunkt t entnommene Leistung wird ermittelt. Mittels der Trendberechnung wird dann festgestellt, ob diese Leistung weiter entnommen werden kann, ohne Gefahr zu laufen, dass die mit dem Energielieferanten vereinbarte Grenze eines maximalen Engergiebezuges innerhalb eines Zeitabschnittes, z.B. 0,25 Stunden, nicht überschritten wird, da anderenfalls für das übrige Vertragsjahr erhöhte Gebühren zu zahlen wären. Hierzu wird eine entsprechende Korrekturleistung berechnet, mittels derer dann der Leistungsbezug zumindest einer Anzahl der Großgeräte gesenkt wird.

Mit dieser Anordnung sind dann verschiedene Betriebsarten möglich, wie sie beispielhaft hier angegeben werden, wie sie auch dann nachfolgend näher erläutert werden:

a) Ein oder mehrere Großgeräte erhalten ihre Volllast. Ihnen wir ein der Maximalleistung entsprechendes Sollwertsignal aufgeprägt.

a. Die anderen Großgeräte teilen sich die "Rest"-Leistung gleichmäßig auf.

b. Die anderen Großgeräte teilen sich die "Rest"-Leistung je mit einem Faktor k (0...1) bewertet, auf.

c. Die anderen Großgeräte teilen sich die "Rest"- leistung auf, wobei jedes Großgerät die mit je einer individuellen Funktion gewertete Restleistung, die dann zeitvariant ist, beaufschlagt wird.

b) Keines der Großgeräte erhält eine Vollast nach. Die nach der Trendberechnung zur Verfügung stehende Leistung wird auf alle Großgeräte aufgeteilt.

a. Alle Großgeräte teilen sich die Leistung gleichmäßig auf.

b. Alle Großgeräte teilen sich die Leistung je mit einem Faktor k (0...1) bewertet, auf.

c. Alle Großgeräte teilen sich die Leistung auf, wobei jedes Großgerät die mit je einer individuellen Funktion gewertete Leistung, die dann zeitvariant ist, beaufschlagt wird.

Eine Ausgestaltung der Erfindung sieht vor, dass die Sollwertgeber-Anordnung einen Prozessrechner als Sollwertgeber beinhaltet. Dabei besteht die Möglichkeit, dass dieser Prozessrechner über ein entsprechendes Interface direkt Einfluss auf die Sollwerteingänge der Sollwerteingänge der Regelungsschaltungen nimmt. Alle nachfolgend geschilderten Formen des Sollwertsignales S können somit von dem Prozessrechner gebildet und ausgegeben werden.

In einer Ausgestaltung der Erfindung ist vorgesehen, dass die Sollwertgeber-Anordnung eine Vorrangschaltung beinhaltet, die mit den Sollwerteingängen der Großgeräte einer Vorrangschaltung verbunden ist.. Diese Vorrangschaltung ist derart aufgebaut, dass jeweils ein oder mehrere Sollwerteingänge wahlweise mit einem der maximalen Leistung entsprechenden Maximalsollwert beaufschlagbar sind. Somit wird es möglich, gezielt ein Großgerät auszuwählen, welches die volle Leistung zur Verfügung hat. Die übrigen Großgeräte werden sich dann in die noch als möglich verbleibende Restleistung teilen. Im Gegensatz zum Stand der Technik wird ein Großgerät nicht zielgerichtet abgeschaltet, sondern vielmehr ein Großgerät zielgerichtet mit Volllast betrieben. Es hat sich nun gezeigt, dass durch diese Funktion eine gleichmäßige Leistungsbegrenzung der Großgeräte eintritt, so dass diese sich ständig in Funktion befinden, wenn auch mit verminderter Leistung. Es wird jedoch nicht ein einzelnes Großgerät außer Funktion gesetzt, wodurch Produktionsengpässe vermieden werden. Das Großgerät, welches die Volllast erhält, wird dasjenige sein, welches die größte Notwendigkeit zeigt, beispielsweise um ein Aufholen in einem Temperaturprozess zu erreichen.

In einer günstigen Ausgestaltung der Erfindung ist vorgesehen, dass die Vorrangschaltung aus einem Wechselschalter besteht. An diesem Wechselschalter ist der Sollwerteingang eines Großgerätes angeschlossen. Dieser Sollwerteingang ist je nach Schalterstellung des Wechselschalters wahlweise mit einer Signalquelle, an der ein dem Maximalsollwert entsprechender Wert fest eingestellt ist, oder mit einem Sollwertgeber verbunden.

Bereits mit einem einzigen solchen Wechselschalter wird es somit möglich, ein Großgerät auf Volllast zu schalten. Hierbei würde der Wechselschalter in eine solche Schaltstelle gebracht, dass der Sollwerteingang der Regelungsschaltung des Großgerätes mit der Signalquelle verbunden ist. Bei den Sollwerteingängen der anderen Großgeräte wird ein Sollwert eingestellt, der nach der Einstellung der Volllast des ersten Großgerätes die verbleibende mögliche Restleistung auf alle anderen Großgeräte entweder gleichmäßig oder mit einem Faktor bewertet oder je Großgerät mit einer Funktion bewertet jeweils zeitlich schwankend (zeitvariant) verteilt. Alle anderen Großgeräte erhalten somit einen Sollwert, bei dem sicher gestellt ist, dass die Trendberechnung das Ergebnis zeigt, dass die maximale Grenze der Energie $W_{max}$ nicht überschritten wird. Eine Verteilung der zur Verfügung stehenden Leistung erfolgt dabei über den Zähler. Da der Zähler stets den aktuellen Leistungsbezug aller angeschlossenen Verbraucher misst, das heißt also den Leistungsbezug durch die Großgeräte aber auch den Leistungsbezug durch die Grundlast, ist stets bekannt, welche Leistung noch zur Verfügung steht. Benötigt also beispielsweise das Großgerät, welches für die Volllast ausgewählt ist, nicht die volle Leistung, beispielsweise weil die Temperatur des Temperaturprozesses erreicht ist, so wird am Zähler auch ein geringerer Leistungsbezug festgestellt und für alle anderen Geräte steht eine größere Leistung zur Verfügung.

Grundsätzlich ist es möglich, diesen Wechselschalter manuell zu betätigen. Die gezielte Prozessbeeinflussung kann jedoch günstig ausgestaltet werden, wenn der Wechselschalter als elektronischer Schalter ausgebildet ist, der einen Schaltersteuereingang zur Steuerung der Schalterstellung aufweist. Dies bietet beispielsweise die Möglichkeit, den Wechselschalter auch über einen Rechner oder über eine Fernsteuereinrichtung zu betätigen.

Wenn auch die erfindungsgemäße Aufgabenstellung bereits dadurch erreicht werden kann, dass stets ein Großgerät bevorzugt in Volllast geschalten wird, so ist es doch zweckmäßig, wenn die Vorrangschaltung je einen Wechselschalter für den Sollwerteingang eines jeden Großgerätes vorsieht. Damit ist es möglich, jedes Großgerät in den Volllastmodus zu schalten. Auch wird es dadurch möglich, mehr als ein Gerät in den Volllastmodus zu schalten, wenn dies erforderlich ist und wenn es die Leistungsbezugsgrenzen erlauben.

Weiterhin ist zweckmäßig, die erfindungsgemäße Anordnung in einer bekannten Prozessrechnerumgebung einzusetzen, wobei der Sollwertgeber als Prozessrechner ausgeführt ist. So wird es möglich, dass der Prozessrechner aus der Trendberechnung einen Sollwert für die nach Abzug der Volllast verbleibende Restleistung berechnet und in den drei dargestellten Varianten auf alle Sollwerteingänge der Großgeräte verteilt.

Weiterhin ist es zweckmäßig, dass der Prozessrechner auch den oder die Wechselschalter steuert, indem dieser mit den Schaltersteuereingängen verbunden ist, wenn er oder diese als elektronischer Schalter ausgebildet sind. Selbstverständlich ist es hierbei möglich, sowohl eine rechnergesteuerte Schaltung der Wechselschalter als auch eine manuelle Ansteuerung der Wechselschalter vorzusehen.

Verfahrensseitig wird die Aufgabe wird dadurch gelöst, dass aus dem Zählersignal ein Leistungssteuersignal ($I_{korr}$) berechnet wird, dessen Größe danach festgelegt wird, ob mit dem momentanen elektrischen Leistungsverbrauch ($P_t$) eine festgelegte Grenze einer elektrischen Energie ($W_{max}$) in einer Zeiteinheit (T) an dem Zähler überschritten würde. Mit diesem Leistungssteuersignal ($I_{korr}$) wird die Leistungsaufnahme ($P_{ti}$) zumindest der Mehrzahl der elektrischen Großgeräte begrenzt. Damit ist sicher gestellt, dass stets nur die Leistung bezogen wird, die ein Überschreiten der maximalen Energiemenge $W_{max}$ verhindert.

In einer ersten Variante des Verfahrens ist vorgesehen, dass die Begrenzung der Leistung $P_{ti}$ zumindest der Mehrzahl i der Großgeräte für alle diese Großgeräte im gleichen Maße erfolgt. Somit trägt zumindest die Mehrzahl aller Großgeräte die "Last" des verringerten Leistungsbezuges in gleichem Maße, wodurch diese Leistungsabsenkung am einzelnen Gerät kaum spürbar wird. Außerdem wird zumindest die Mehrzahl der Großgeräte betroffen, so dass sich der gesamte technologische Prozess auf diese Absenkung einstellen kann.

In einer weiteren Variante des Verfahrens ist vorgesehen, dass die Begrenzung der Leistung ($P_{ti}$) mindestens eines der Größgeräte (2) durch eine Multiplikation des Leistungssteuersignales ($I_{korr}$) mit einem Faktor k (k= 0...1) erfolgt. Somit können die Großgeräte gezielt beeinflusst werden.

In einer weiteren Variante ist vorgesehen, dass die Begrenzung der Leistung ($P_{ti}$) zumindest der Mehrzahl der Großgeräte für alle diese Großgeräte nach einer zeitvarianten Funktion erfolgt. Dabei wird zweckmäßiger Weise das Sollwertsignal S mit einem Faktor k multipliziert, wobei der Faktor k selbst zeitvariant ist und einer Funktion k = f(t) unterliegt. Hierdurch können Prozesse an den Großgeräten gezielt beeinflusst werden.

In einer weiteren Ausgestaltung des erfindungsgemäßen Verfahrens ist vorgesehen, dass mindestens eines der parallel geschalteten Großgeräte in einen Vorrangmodus, das heißt in einen Zustand maximal möglichen Leistungsbezuges, geschalten wird und die Leistung aller anderen der parallel geschalteten Großgeräte im gleichen Verhältnis begrenzt wird. Somit wird es möglich, gezielt ein Großgerät auszuwählen, welches die volle Leistung zur Verfügung hat. Die übrigen Großgeräte werden sich dann in die noch als möglich verbleibende Restleistung teilen. Im Gegensatz zum Stand der Technik wird ein Großgerät nicht zielgerichtet abgeschaltet, sondern vielmehr ein Großgerät zielgerichtet mit Volllast betrieben. Es hat sich nun gezeigt, dass durch diese Funktion eine gleichmäßige Leistungsbegrenzung der Großgeräte eintritt, so dass diese sich ständig in Funktion befinden, wenn auch mit verminderter Leistung. Es wird jedoch nicht ein einzelnes Großgerät außer Funktion gesetzt, wodurch Produktionsengpässe vermieden werden. Das Großgerät, welches die Volllast erhält, wird dasjenige sein, welches die größte Notwendigkeit zeigt, beispielsweise um ein Aufholen in einem Temperaturprozess zu erreichen.

In einer günstigen Ausgestaltung des erfindungsgemäßen Verfahrens ist vorgesehen, dass der Leistungssteuereingang des oder der Geräte, die in den Vorrangmodus geschalten werden, mit einem dem maximalen Leistungsbezug entsprechenden Leistungssteuersignal beaufschlagt wird und an die Leistungssteuereingänge der anderen Großverbraucher jeweils das gleiche aus der Trendberechnung ermittelte Leistungssteuersignal angelegt wird. Damit wird es somit möglich, ein Großgerät auf Volllast zu schalten, wobei der Leistungssteuereingang der Regelungsschaltung des Großgerätes mit einer festen Signalquelle verbunden werden kann. Bei den Sollwerteingängen der anderen Großgeräte wird ein Leistungssteuersignal eingestellt, das nach der Einstellung der Volllast des ersten Großgerätes die verbleibende mögliche Restleistung auf alle anderen Großgeräte gleichmäßig, gewichtet oder zeitvariant verteilt. Alle anderen Großgeräte erhalten somit einen Leistungssteuerwert, bei dem die Trendberechnung das Ergebnis zeigt, dass die maximale Grenze der Energie $W_{max}$ nicht überschritten wird. Eine Verteilung der zur Verfügung stehenden Leistung erfolgt dabei über den Zähler. Da der Zähler stets den aktuellen Leistungsbezug misst, das heißt also den Leistungsbezug durch die Großgeräte aber auch den Leistungsbezug durch die Grundlast, ist stets bekannt, welche Leistung noch zur Verfügung steht. Benötigt also beispielsweise das Großgerät, welches für die Volllast ausgewählt ist, nicht die volle Leistung, beispielsweise weil die Temperatur des Temperaturprozesses erreicht ist, so wird am Zähler auch ein geringerer Leistungsbezug festgestellt und für alle anderen Geräte steht eine größere Leistung zur Verfügung.

Es ist dabei zweckmäßig, jedes Großgerät in den Volllastmodus schalten zu können. Auch wird es dadurch möglich, mehr als ein Gerät in den Volllastmodus zu schalten, wenn dies erforderlich ist und wenn es die Leistungsbezugsgrenzen erlauben.

Durch das erfindungsgemäße Verfahren wird nicht nur ein Überschreiten einer maximalen mittleren Leistung im Zeitintervall vermieden, sondern es kann sogar eine Senkung der maximalen mittleren Leistung erreicht werden, ohne dass eine Produktionsbeeinträchtigung eintritt. Damit kann durch die erfindungsgemäße Anordnung sogar eine Kostensenkung der Produktion erreicht werden.

Die Erfindung soll nachfolgend anhand eines Ausführungsbeispieles näher erläutert werden. In den zugehörigen Zeichnungen zeigt

Fig. 1    eine Darstellung der Messung eines Energiebezuges zur Tarifberechnung,

Fig. 2    eine graphische Darstellung der Leistungsbegrenzung,

Fig. 3    eine Prinzipdarstellung einer erfindungsgemäßen Schaltungsanordnung mit Vorrangschaltung

Fig. 4    eine Prinzipdarstellung einer erfindungsgemäßen Schaltungsanordnung ohne Vorrangschaltung

Fig. 5    drei Darstellungen des zeitlichen Verlaufes eines Korrekturfaktors k und

Fig. 6    eine Darstellung der Auswirkungen der Harmonisierung durch das erfindungsgemäße Verfahren im Vergleich zum Stand der Technik.

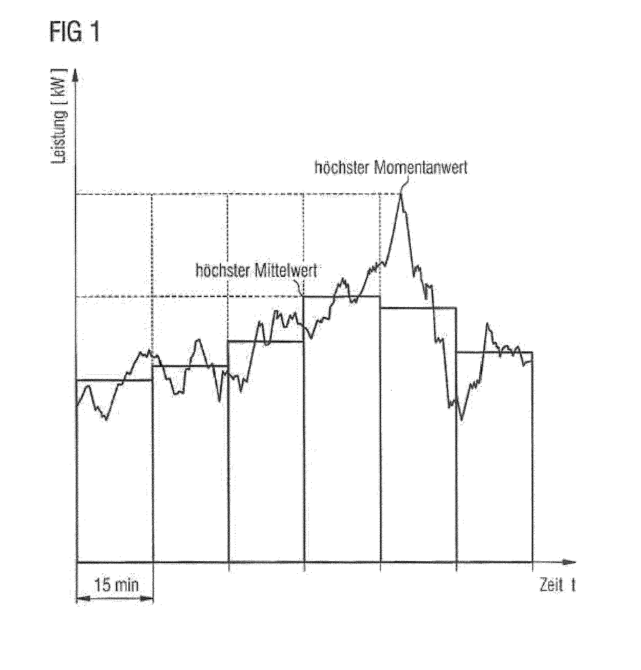

In Fig. 1 ist die Leistung eines Verbrauchers in Abhängigkeit von der Zeit dargestellt. Je nach dem Schaltzustand von Großgeräten und nach Anforderungen der Grundlast, die sich aus dem Energiebezug vieler kleinerer Verbraucher, wie Beleuchtung, Bürogeräte usw. zusammensetzt, schwankt die entnommene Leistung des Verbrauchers über die Zeit. Der Tarif, der für den Energiebezug berechnet wird, ermittelt sich nach dem höchsten Mittelwert der Leistungsentnahme innerhalb eines Zeitfensters von 15 Minuten. Wie aus Fig. 1 ersichtlich, ist dabei nicht der höchste momentane Wert entscheidend, sondern eben der höchste Mittelwert innerhalb des Zeitfensters. Damit ist es das Bestreben des Verbrauchers, innerhalb eines Zeitfensters den höchsten Mittelwert so niedrig wie möglich zu halten, nach Möglichkeit im Bereich des über einen längeren Zeitraum gemittelten Leistungsbezuges.

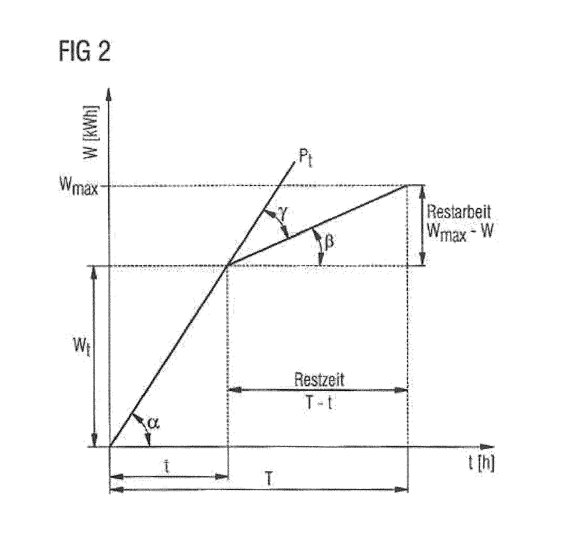

Wie aus Fig. 2 ersichtlich, erfolgt eine Leistungsbegrenzung durch die Berechnung eines Trends, bei dem die geleistete elektrische Energie $W_t$ zur Grundlage genommen wird. Um zu dem Ziel eines nicht übermäßigen Energiebezuges innerhalb des Zeitintervalls T zu gelangen, soll eine höchste Grenze an elektrischer Energie $W_{max}$ nicht überschritten werden. Aus diesem Grunde wird die entnommene momentane Leistung $P_t$ gemessen und deren Zeitverhalten ermittelt. Wird nunmehr zu einem Zeitpunkt t festgestellt, dass ein weiterer Leistungsbezug, der einen Anstieg der Energie $W_t$ mit einem Anstiegswinkel $\alpha$ nach

$$\frac{W_t}{t} = P_t \quad \sim \tan \alpha$$

bewirkt, zu einem Überschreiten der Grenze an elektrischer Energie $W_{max}$ führen würde, erfolgt eine Reduzierung der Leistung zu der optimalen Leistung $P_{opt}$, die zu einem verringerten Anstieg der Energie mit dem Anstiegswinkel $\beta$ nach

$$\frac{W_{max} - W_t}{T - t} = P_{opt} \quad \sim \tan \beta$$

führt. Um zu der optimalen Leistung $P_{opt}$ zu gelangen, ist es erforderlich, eine Korrekturleistung $P_{korr}$ nach

$$P_{korr} = \frac{W_t}{t} - \frac{W_{max} - W_t}{T - t}$$

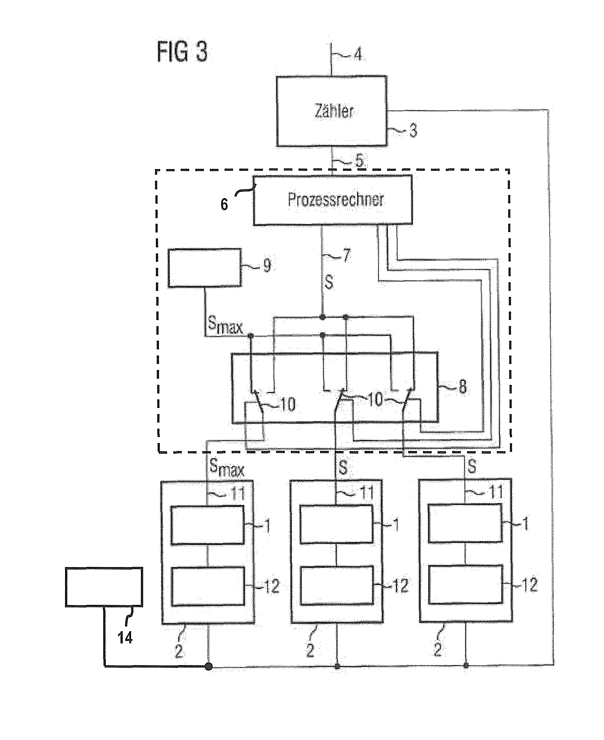

zu berechnen. Bei $P_{korr} \leq 0$ ist ein Zuschalten von Leistung möglich, bei $P_{korr} \geq 0$ ein Abschalten erforderlich. Zur Realisierung dieser Schaltfunktionen wird ein der Korrekturleistung $P_{korr}$ entsprechender Sollwert S für die Regler 1, die in Fig. 3 dargestellt sind, als Stromwert bereitgestellt.

Wie in Fig. 3 gezeigt, sind drei Öfen 2 über einen Zähler 3 parallel an ein Mittelspannungsnetz 4 angeschlossen. An diesem Zähler können auch kleinere Verbraucher 14, wie Beleuchtung, Bürogeräte usw. deren Energiebezug die Grundlast bildet angeschlossen sein. Der Zähler 3 weist einen Impulsausgang 5 auf, der mit einem Prozessrechner 6 verbunden ist. In dem Prozessrechner 6 erfolgt die Berechnung des Sollwertes S in der oben dargestellten Art und Weise.

Der Sollwertausgang 7 ist mit einer Vorrangschaltung 8 verbunden. Ebenfalls mit der Vorrangschaltung 8 verbunden ist eine Signalquelle 9, die einen dem maximalen Sollwert $S_{max}$ entsprechenden Wert an seinem Ausgang bereithält.

Die Vorrangschaltung 8 weist für jeden der Öfen 2 einen elektronischen Wechselschalter 10 auf. Jeder der Wechselschalter 10 ist mit einem Sollwerteingang 11 der Regler 1 für die Heizungen 12 verbunden.

Jeder der Wechselschalter 10 ist mit einem Schaltersteuereingang 13 versehen, die alle mit dem Prozessrechner 6 verbunden sind. Zur Erreichung der für den Energiebezug optimalen Leistung $P_{opt}$ wird nunmehr der linke der Öfen 2 in Vorrang geschaltet. Hierzu wird sein Wechselschalter 10 mittels des Prozessrechners 6 so geschaltet, dass der Sollwerteingang 11 mit der Signalquelle 9 verbunden wird. Die anderen der Wechselschalter 10 sind so geschalten, dass an den Sollwerteingängen 11 überall der der Korrekturleistung $P_{korr}$ entsprechende Sollwert S anliegt. Damit kann der linke der Öfen 2 über seine volle Leistung verfügen. Die Leistungsabsenkung zur Erreichung der optimalen Leistung $P_{opt}$ wird über alle anderen der Öfen 2 gleich verteilt, so dass jeder dieser Öfen 2 in seiner Leistungsverfügbarkeit nur um einen geringen Betrag abgesenkt wird, ansonsten jedoch im Betrieb verbleibt. Damit entstehen Beeinträchtigungen im Produktionsablauf höchstens im Bereich vernachlässigbarer Grenzen.

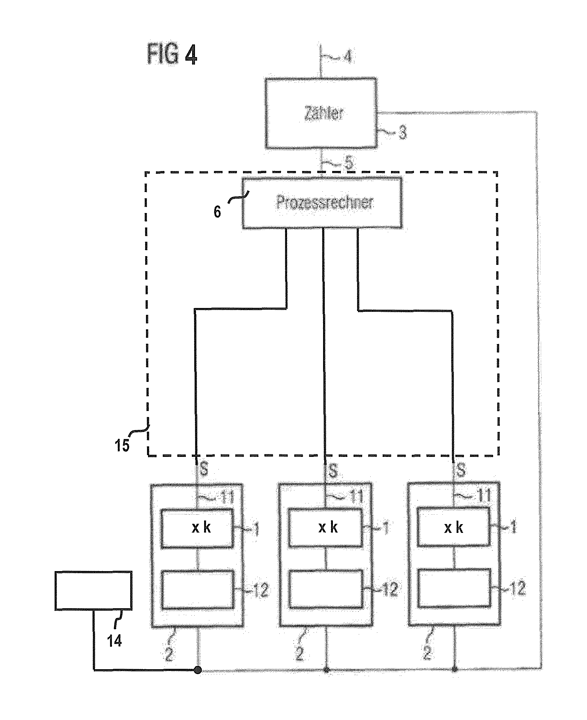

Wie in Fig. 4 dargestellt, übernimmt der Prozessrechner 6 alle Steuerungsaufgaben. Über ihn erfolgt sowohl die Trendberechnung als auch die Verteilung des Sollwertsignales S mit oder ohne Vorrangschaltung.

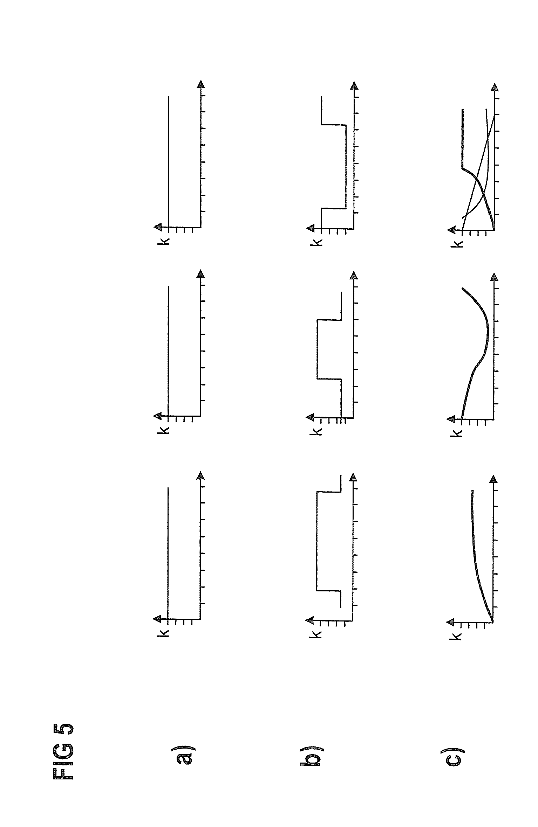

Zweckmäßiger Weise kann in den Reglern 1 eine Bewertung des Sollwertsignales mit einem Faktor k vorgesehen sein, wie dies in Fig. 4 angedeutet ist, wobei k die Funktionen einnehmen kann, die in Fig. 5 dargestellt sind.

Dabei zeigt

    a) eine parallele gleichförmige Analogsteuerung $I_{korr}$ = 4-20mA oder 0-10V nach Trendgleichung (Fig. 2) (lineare, parallele Übergabe).

b) zeigt eine parallele Absenkung mit individueller Korrektureinstellung durch einstellbare Teiler vor dem Abgang Schmelzofen. Einstellbarer Belastungsfaktor für jeden Ofen. (Einstellregler)

c) zeigt einen programmgesteuerten Verlauf des Belastungsfaktors an jedem Ofenabgang. (Prozessrechner)

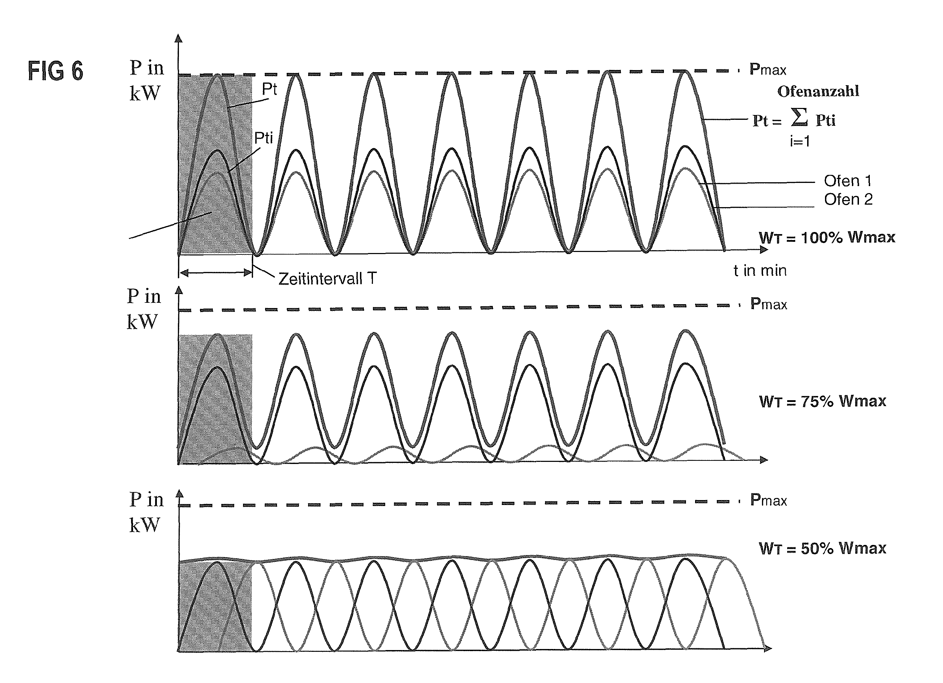

In Fig. 6 ist mit der oberen Kurve der stochastische Strombezug von 2 Mittelfrequenz-Öfen nach dem Stand der Technik gezeigt, dessen Folge ein hoher Energiebezug ist.

Die mittlere Kurve stellt das nach dem Stand der Technik angewandte Prinzip der Begrenzung der Amplituden dar, bei dem eine Abschaltung eines Mittelfrequenz-Ofens auf technische Minimallast erfolgt, dessen Folge Produktionsausfall ist.

Die untere Kurve zeigt die Auswirkung des erfindungsgemäßen Verfahrens. Hier erfolgt eine Amplitudenharmonisierung, wodurch geringere Stromkosten, eine höhere Produktivität und geringere Stromamplituden erreicht werden können.

Bezugszeichenliste

1    Regler
2    Ofen
3    Zähler
4    Mittelspannungsnetz
5    Impulsausgang
6    Prozessrechner
7    Sollwertausgang
8    Vorrangschaltung
9    Signalquelle
10   Wechselschalter
11   Sollwerteingang
12   Heizung
13   Schaltersteuereingang
14   Verbraucher
15   Sollwertgeber-Anordnung

**Patentansprüche**

1. Schaltungsanordnung zur Verteilung eines Energieangebotes an elektrische Großgeräte (2) in einer Zeiteinheit T, die mit ihrem Leistungseingang über einen Zähler (3) in einem Stromnetz (4) parallel geschalten sind, bei der die Großgeräte (2) mit einer eigenen, den Verbrauch beeinflussenden Regelungsschaltung (1) versehen sind, die einen leistungsbegrenzenden Sollwerteingang (11) aufweist, **dadurch gekennzeichnet , dass** eine die Sollwerteingänge mit je einem von dem Leistungsbezug aller an dem Zähler (3) angeschlossenen Verbraucher (2; 14) abhängigem Sollwertsignal (S) beaufschlagende Sollwertgeber-Anordnung (15) mit den Sollwerteingängen (11) der Regelungsschaltungen (1) der Großgeräte (2) verbunden ist.

2. Schaltungsanordnung nach Anspruch 1, **dadurch gekennzeichnet, dass** die Sollwertgeber-Anordnung (15) einen Prozessrechner (6) als Sollwertgeber beinhaltet.

3. Schaltungsanordnung nach Anspruch 1, **dadurch gekennzeichnet, dass** die Sollwertgeber-Anordnung (15)eine Vorrangschaltung (8) beinhaltet, die mit den Sollwerteingängen (11) der Großgeräte (2) derart verbunden ist, dass jeweils ein oder mehrere Sollwerteingänge (11) wahlweise mit einem der maximalen Leistung entsprechenden Maximalsollwert beaufschlagbar sind.

4. Schaltungsanordnung nach Anspruch 3, **dadurch gekennzeichnet, dass** die Vorrangschaltung (8) aus einem Wechselschalter (10) besteht, an dem der Sollwerteingang (11) eines Großgerätes (2) angeschlossen ist und über den der Sollwerteingang (11) je nach Schalterstellung wahlweise mit einer Signalquelle (9), an der ein dem Maximalsollwert entsprechender Wert fest eingestellt ist, oder mit einem Sollwertgeber (6) verbunden ist.

**5.** Schaltungsanordnung nach Anspruch 4, **dadurch gekennzeichnet, dass** der Wechselschalter (10) als elektronischer Wechselschalter ausgebildet ist, der einen Schaltersteuereingang (13) zur Steuerung der Schalterstellung aufweist.

**6.** Schaltungsanordnung nach Anspruch 5, **dadurch gekennzeichnet, dass** die Vorrangschaltung (8) je einen Wechselschalter (10) für den Sollwerteingang eines jeden Großgerätes (2) vorsieht.

**7.** Schaltungsanordnung nach Anspruch 2 und 6, **dadurch gekennzeichnet , dass** der Prozessrechner (6) mit den Schaltersteuereingängen (13) verbunden ist.

**8.** Verfahren zur Verteilung eines Energieangebotes an elektrische Großgeräte in einer Zeiteinheit (T), bei dem aus einem den elektrischen Leistungsverbrauch zumindest aller parallel geschalter Großgeräte repräsentierenden Zählersignal mittels eines Trendrechnungsverfahrens zu mehreren Zeitpunkten (t) ermittelt wird, ob mit dem momentanen Leistungsbezug ($P_t$) eine maximale Energie ($W_{max}$) überschritten würde und in Abhängigkeit davon eine Reduzierung des maximalen Leistungsbezuges eines oder mehrerer Großgeräte erfolgt, **dadurch gekennzeichnet , dass** aus dem Zählersignal ein Leistungssteuersignal ($I_{korr}$) berechnet wird, dessen Größe danach festgelegt wird, ob mit dem momentanen elektrischen Leistungsverbrauch ($P_t$) eine festgelegte Grenze einer elektrischen Energie ($W_{max}$) in einer Zeiteinheit (T) an dem Zähler überschritten würde, und mit diesem Leistungssteuersignal ($I_{korr}$) die Leistungsaufnahme ($P_{ti}$) zumindest der Mehrzahl (i) der elektrischen Großgeräte begrenzt wird.

**9.** Verfahren nach Anspruch 8, **dadurch gekennzeichnet, dass** die Begrenzung der Leistung ($P_{ti}$) zumindest der Mehrzahl der Großgeräte (2) für alle diese Großgeräte (2) im gleichen Maße erfolgt.

**10.** Verfahren nach Anspruch 11, **dadurch gekennzeichnet, dass** die Begrenzung der Leistung ($P_{ti}$) mindestens eines der Größgeräte (2) durch eine Multiplikation des Leistungssteuersignales ($I_{korr}$) mit einem Faktor k (k= 0...1) erfolgt.

**11.** Verfahren nach Anspruch 8, **dadurch gekennzeichnet, dass** die Begrenzung der Leistung ($P_{ti}$) zumindest der Mehrzahl der Großgeräte (2) für alle diese Großgeräte (2) nach einer zeitvarianten Funktion erfolgt.

**12.** Verfahren nach Anspruch 11, **dadurch gekennzeichnet, dass** die Begrenzung der Leistung ($P_{ti}$) mindestens eines der Größgeräte (2) durch eine Multiplikation des Leistungssteuersignales ($I_{korr}$) mit einem Faktor k (k= 0...1) erfolgt, wobei sich dieser Faktor zeitlich verändert.

**13.** Verfahren nach einem der Ansprüche 8 bis 12, **dadurch gekennzeichnet, dass** mindestens eines der parallel geschalteten Großgeräte in einen Vorrangmodus, das heißt in einen Zustand maximal möglichen Leistungsbezuges, geschalten wird und die Leistung aller anderen der parallel geschalteten Großgeräte im gleichen Verhältnis begrenzt wird.

**14.** Verfahren nach Anspruch 8, **dadurch gekennzeichnet dass** der Leistungssteuereingang des oder der Geräte, die in den Vorrangmodus geschalten werden, mit einem dem maximalen Leistungsbezug entsprechenden Leistungssteuersignal beaufschlagt wird und an die Leistungssteuereingänge der anderen Großverbraucher jeweils das gleiche aus der Trendberechnung ermittelte Leistungssteuersignal angelegt wird.

FIG 1

FIG 2

FIG 3

FIG 4

Zähler ~4

~3

~5

Prozessrechner

6

15

S    S    S

~11    ~11    ~11

x k  1    x k  1    x k  1

~12    ~12    ~12

14

2    2    2

FIG 5

a)

b)

c)

FIG 6